# EUROPÄISCHE PATENTSCHRIFT

(11) **EP 1 511 801 B1**
(45) Veröffentlichungstag und Bekanntmachung des Hinweises auf die Patenterteilung: **28.12.2005**
(21) Anmeldenummer: 03717325.9
(22) Anmeldetag: 02.05.2003
(51) Int. Cl.: C08K 5/549

(54) **FUNKTIONALISIERTE POLYEDRISCHE OLIGOMERE SILIZIUM-SAUERSTOFF-CLUSTER ALS VERNETZER**
FUNCTIONALISED POLYHEDRAL OLIGOMER SILICON-OXYGEN CLUSTERS AS CROSS-LINKING AGENTS
OLIGOMERES DE CLUSTER SILICIUM-OXYGENE POLYEDRIQUES FONCTIONNALISES UTILISES COMME RETICULANT

(30) Priorität: 08.05.2002 DE 10220853
(43) Veröffentlichungstag der Anmeldung: 09.03.2005
(73) Patentinhaber: Degussa AG, 40474 Düsseldorf (DE)
(72) Erfinder: KÜHNLE, Adolf, 45770 Marl (DE); JOST, Carsten, 45770 Marl (DE); ABBENHUIS, Hendrikus, Cornelis, Louis, NL-5672 RB Nuenen (NL)
(86) Internationale Anmeldenummer: PCT/EP2003/004587
(87) Internationale Veröffentlichungsnummer: WO 2003/095547

(56) Entgegenhaltungen:
- EP-A- 1 213 292
- WO-A-00/76634
- WO-A-02/100867
- WO-A-03/042223
- ZHANG CHUNXIN ET AL: "Hydrosilylation of Allyl Alcohol with [HSiMe2OSiO1.5]8: Octa(3-hydroxypropyldimethylsiloxy)octasil sesquioxane and Its Octamethacrylate Derivative as Potential Precursors to Hybrid Nanocomposites" JOURNAL OF THE AMERICAN CHEMICAL SOCIETY, AMERICAN CHEMICAL SOCIETY, WASHINGTON, DC, US, Bd. 122, 2000, Seiten 6979-6988, XP002254242 ISSN: 0002-7863
- FEHER F J ET AL: "CONTROLLED PARTIAL HYDROLYSIS OF SPHEROSILICATE FRAMEWORKS: SYNTHESES OF ENDO-(ME3SIO)6SI6O7(OH)4 AND ENDO-(ME3SIO)6SI6O7äOSIME2(CH=CH2)ü4 FROM (ME3SIO)6SI6O9" CHEMICAL COMMUNICATIONS - CHEMCOM, ROYAL SOCIETY OF CHEMISTRY, GB, 1999, Seiten 2513-2514, XP001038447 ISSN: 1359-7345

## Beschreibung

Die Erfindung betrifft einen Vernetzer zur Vernetzung von organischen und/oder anorganischen Matrixmaterialien, die daraus resultierende Matrix, das hierfür angewandte Verfahren und die Verwendung dieses Vernetzers, wobei der Vernetzer funktionalisierte polyedrische oligomere Silizium-Sauerstoff-Clustereinheiten aufweist.

Vernetzer sind für die Herstellung von Werkstoffen auf der Basis von Kunststoffen von hoher Bedeutung. Auch für die Herstellung von anorganischen Werkstoffen sind vernetzende Mittel in Bezug auf die Optimierung der Eigenschaften essentiell.

Bei organischen Matrixmaterialien erfolgt die Härtung entweder durch Abkühlung nach der Verarbeitung, wie z.B. bei den Thermoplasten, oder durch eine nachträgliche Vernetzung, wie z.B. bei Elastomeren oder Duroplasten. Diese Vernetzung kann auf verschiedene Arten durchgeführt werden. Häufig geschieht dies durch das Bestrahlen des Matrixmaterials mit energiereicher Strahlung. Eine weitere Methode ist die Erzeugung von radikalischen Verbindungen, die z.B. eine Vernetzung über Doppelbindungen im Polymer initiieren. Eine Vernetzung kann ebenfalls über die Zugabe von Vernetzern mit reaktionsfähigen Gruppen, wie z.B. Amino-, Hydroxyl-, Isocyanat- oder Epoxygruppen, erfolgen.

Ein Vernetzer kann auf zwei verschiedenen Arten wirken. Bei unpolaren Matrixmaterialien, die keine funktionellen Gruppen für eine kovalente Anbindung des Vernetzers an das Matrixmaterial aufweisen, reagiert der Vernetzer mit sich selbst und bildet somit ein eigenes Netzwerk in der Matrix aus, das aus den resultierenden Struktureinheiten des Vernetzers besteht. Man spricht hierbei von einem sogenannten "interpenetrating network". Eine weitere Vernetzungsart, in vielen Fällen die bevorzugte Methode, ist die Anbindung des Vernetzers an das Matrixmaterial über kovalente Bindungen. Die reaktiven funktionellen Gruppen beim Vernetzer und beim zu vernetzenden Matrixmaterial müssen aufeinander abgestimmt sein. So kann sowohl das Matrixmaterial als auch der Vernetzer Doppelbindungen, Hydroxyl-, Carboxyl-, Amino-, Isocyanat- oder Epoxygruppen enthalten. Durch Strahlung, Temperatur, Feuchtigkeitszugabe oder Zugabe eines Initiators wird die Reaktion zwischen Matrix und Vernetzer eingeleitet, so dass es zur Ausbildung von kovalenten Bindungen kommt. Als Strahlung kann für das Starten des Vernetzungsprozesses Elektronen-, UV- oder Mikrowellenstrahlung verwendet werden. Besitzen die Matrixmaterialien keine funktionellen Gruppen, wie z.B. Kunststoffe auf Basis von Polyolefinen, so können funktionelle Gruppen nachträglich erzeugt werden. Nach solch einem Verfahren, wie z.B. die "Beflammung" oder die "Koronaentladung", entstehen auf einer Kunststoffoberfläche Hydroxyl- bzw. Carboxylgruppen, die für eine Reaktion mit dem Vernetzer genutzt werden können.

Für die Ausbildung dieser kovalenten Bindungen kommen verschiedene chemische Reaktionen bzw. Reaktionsmechanismen in Frage, wie z.B.
- Veresterung (Hydroxylgruppe plus Carbonsäure- bzw. Carbonsäurederivatgruppe),
- Hydrosilylierungsreaktion (Addition einer SiH-Gruppe an Alkane oder Alkene),
- Urethanbildung (Hydroxylgruppe plus Isocyanatgruppe),
- Harnstoffbildung (Aminogruppe plus Isocyanatgruppe),
- Aminoalkoholbildung (Epoxygruppe plus Aminogruppe) oder
- Bildung von Hydroxyethern (Epoxygruppe plus Alkohol).

Elastomere, thermoplastische sowie duroplastische Kunststoffe weisen eine hohe Elastizität auf. Meist verfügen sie jedoch über eine geringe Temperaturstabilität und eine geringe mechanische Stabilität. Die Oberflächen aus organischen Matrixmaterialien, wie z.B. Kunststoffe, sind in der Regel weniger abrieb- und kratzfest als die Oberflächen aus anorganischen Matrixmaterialien.

Anorganische Matrixmaterialien können durch Wasser, wie z.B. beim Beton, oder durch das Kohlendioxid der Luft, wie z.B. beim Mörtel, gehärtet werden. Im Gegensatz zu Werkstoffen aus organischen Matrixmaterialien besitzen Werkstoffe aus anorganische Matrixmaterialien eine hohe mechanische Festigkeit und eine hohe Temperaturbeständigkeit. Anorganische Werkstoffe weisen jedoch aufgrund ihrer hohen Sprödigkeit eine geringe Elastizität auf. Des weiteren wird häufig ein kontrolliertes und ggf. schnelles Abbindeverhalten, sowie in manchen Fällen hydrophobes Verhalten gefordert.

Es war deshalb die Aufgabe der vorliegenden Erfindung einen Vernetzer zu entwickeln, der vor dem Abbinden anorganischer Matrizes, wie beispielsweise Beton, Mörtel oder Putz, deren Elastizität erhöht und bei organischen Matrizes, z.B. Schmelzklebstoffen, vor dem Aushärtungsvorgang deren Adhäsion und Kohäsion nicht beeinträchtigt, jedoch deren Abbindezeit verkürzt und die mechanische Stabilität bzw. Festigkeit und die Temperaturstabilität erhöht.

Überraschenderweise wurde gefunden, dass bei der Verwendung von Vernetzern, die funktionalisierte polyedrische oligomere Silizium-Sauerstoff-Clustereinheiten aufweisen, in organischen Matrixmaterialien die mechanische und thermische Stabilität des daraus resultierenden Werkstoffes deutlich erhöht werden kann. Zudem erhöht sich durch den Einsatz von Vernetzern mit funktionalisierten polyedrischen oligomeren Silizium-Sauerstoff-Clustereinheiten die mechanische Festigkeit des daraus resultierenden organischen Werkstoffes. Die Verwendung dieser erfindungsgemäßen Vernetzer in Pulverlacken auf Isocyanatbasis erhöht deren Haftung und die Topfzeit von Gießmassen auf Epoxidharzbasis wird durch deren Verwendung verlängert. Obwohl die verschiedenen Vernetzungsarten und auch die Herstellung dieser polyedrischen oligomeren Silizium-Sauerstoff-Cluster bereits seit längerer Zeit bekannt sind, wurde nicht erkannt, dass diese Vernetzer mit funktionalisierten polyedrischen oligomeren Silizium-Sauerstoff-Clustereinheiten in organischen Matrixmaterialen von essentieller Bedeutung für die Optimierung der Eigenschaften von Werkstoffen sind. Die Lösung der Aufgabe war umso überraschender, zumal sich zeigte, dass diese Vernetzer mit funktionalisierten polyedrischen oligomeren Silizium-Sauerstoff-Clustereinheiten bei anorganischen Matrixmaterialen ebenfalls eine vernetzende Wirkung zeigen. Dies hat zur Folge, dass sich die Elastizität dieser so hergestellten anorganischen Werkstoffe mit dem Zusatz von chemischen Verbindungen mit funktionalisierten polyedrischen oligomeren Silizium-Sauerstoff-Clustereinheiten als vernetzendes Mittel steigern lässt.

Unter einem polyedrischen oligomeren Silizium-Sauerstoff-Cluster werden vorzugsweise die beiden Verbindungsklassen der Silasesquioxane und der Sphärosilikate verstanden.

Silasesquioxane sind oligomere oder polymere Stoffe, deren vollständig kondensierte Vertreter die allgemeinen Formel (SiO_{3/2}R)ₙ besitzen, wobei n ≥ 4 und der Rest R ein Wasserstoffatom sein kann, meist jedoch einen organischen Rest darstellt. Die kleinste Struktur eines Silasesquioxans ist der Tetraeder. Voronkov und Lavrent'yev (Top. Curr. Chem. **102** (1982), 199-236) beschreiben die Synthese von vollständig kondensierten und unvollständig kondensierten oligomeren Silasesquioxanen durch hydrolytische Kondensation trifunktioneller RSiY₃-Vorstufen, wobei R für einen Kohlenwasserstoffrest steht und Y eine hydrolisierbare Gruppe, wie z.B. Chlorid, Alkoxid oder Siloxid, darstellt. Lichtenhan et al. beschreiben die basenkatalysierte Herstellung von oligomeren Silasesquioxanen (WO 01/10871). Silasesquioxane der Formel R₈Si₈O₁₂ (mit gleichen oder unterschiedlichen Kohlenwasserstoffresten R) können basenkatalysiert zu funktionalisierten, unvollständig kondensierten Silasesquioxanen, wie z.B. R₇Si₇O₉(OH)₃ oder auch R₈Si₈O₁₁(OH)₂ und R₈Si₈O₁₀(OH)₄, umgesetzt werden (Chem. Commun. (1999), 2309-10; Polym. Mater. Sci. Eng. **82** (2000), 301-2; WO 01/10871) und damit als Stammverbindung für eine Vielzahl verschiedener unvollständig kondensierter und funktionalisierter Silasesquioxane dienen. Insbesondere die Silasesquioxane (Trisilanole) der Formel R₇Si₇O₉(OH)₃ lassen sich durch Umsetzung mit funktionalisierten, monomeren Silanen (corner capping) in entsprechend modifizierte oligomere Silasesquioxane überführen.

Oligomere Sphärosilikate sind ähnlich aufgebaut wie die oligomeren Silasesquioxane. Auch sie besitzen eine "käfigartige" Struktur. Im Unterschied zu den Silasesquioxanen, bedingt durch ihre Herstellungsmethode, sind die Siliziumatome an den Ecken eines Sphärosilikates mit einem weiteren Sauerstoffatom verbunden, welches wiederum weiter substituiert ist. Oligomere Sphärosilikate lassen sich durch Silylierung geeigneter Silikat-Vorstufen herstellen (D. Hoebbel, W. Wieker, Z. Anorg. Allg. Chem. **384** (1971), 43-52; P. A. Agaskar, Colloids Surf. **63** (1992), 131-8; P. G. Harrison, R. Kannengiesser, C. J. Hall, J. Main Group Met. Chem. **20** (1997), 137-141; R. Weidner, Zeller, B. Deubzer, V. Frey, Ger. Offen. (1990), DE 38 37 397). So kann beispielsweise das Sphärosilikat mit der Struktur **2** aus der Silikat-Vorstufe der Struktur **1** synthetisiert werden, welche ihrerseits über die Umsetzung von Si(OEt)₄ mit Cholinsilikat bzw. durch die Umsetzung von Abfallprodukten der Reisernte mit Tetramethylammoniumhydroxid zugänglich ist (R. M. Laine, I. Hasegawa, C. Brick, J. Kampf, Abstracts of Papers, 222nd ACS National Meeting, Chicago, IL, United States, August 26-30, 2001, MTLS-018).

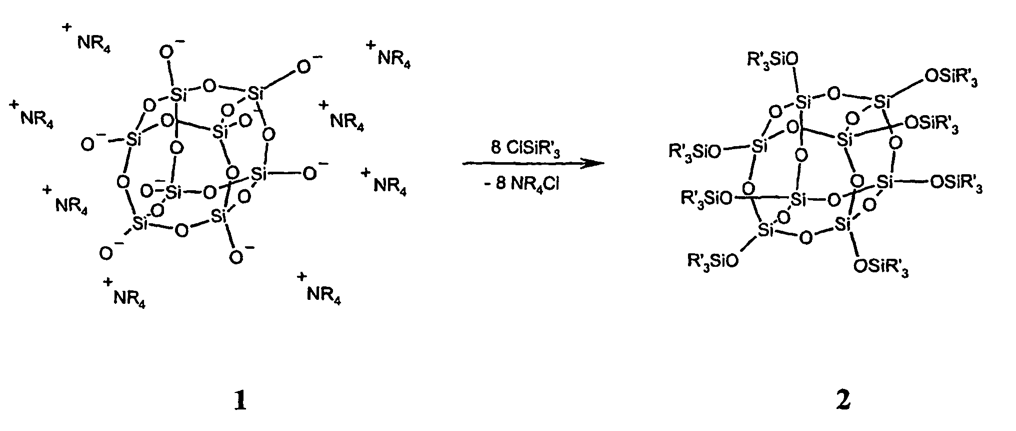

Sowohl die Silasesquioxane als auch die Sphärosilikate sind bei Temperaturen bis zu mehreren hundert Grad Celsius thermisch stabil.

Gegenstand der vorliegenden Erfindung ist daher ein Vernetzer gemäß Anspruch 1 zur Vernetzung von Matrixmaterialien, wobei der Vernetzer funktionalisierte polyedrische oligomere Silizium-Sauerstoff-Clustereinheiten aufweist, gemäß der Formel

[(RₐX_{b}SiO_{1,5})ₘ (R_{c}X_{d}SiO)ₙ (RₑX_{f}Si₂O_{2,5})ₒ (R_{g}XₕSi₂O₂)ₚ]

mit a, b, c = 0-1; d = 1-2; e, f, g = 0-3; h = 1-4; m+n+o+p ≥ 4; a+b = 1; c+d = 2; e+f = 3 und g+h = 4;
- **R =**: Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
- **X** =: Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R,**
wobei die Substituenten vom Typ **R** gleich oder unterschiedlich sind und die Substituenten vom Typ **X** gleich oder unterschiedlich sind.

Außerdem ist Gegenstand der vorliegenden Erfindung die Verwendung des erfindungsgemäßen Vernetzers in organischen und/oder anorganischen Matrixmaterialien sowie die daraus resultierende Matrix und das hierfür angewandte Verfahren.

Der erfindungsgemäße Vernetzer hat den Vorteil, dass man Werkstoffe, basierend auf einem oder mehreren organischen Matrixmaterialien, mit erhöhter mechanischer Stabilität und mechanischer Festigkeit, verbesserter Lösungsmittelbeständigkeit, verbessertem Absperrverhalten, erhöhter Adhäsion, höherer Temperaturbeständigkeit und/oder Abrieb- und Kratzfestigkeit an der Oberfläche erhält. Zudem lässt sich die Elastizität von anorganischen Werkstoffen durch die Verwendung von chemischen Verbindungen, die funktionalisierte polyedrische oligomere Silizium-Sauerstoff-Clustereinheiten aufweisen, als vernetzendes Mittel steigern. Im Gegensatz zu vielen herkömmlichen Vernetzern kann über die Substituenten dieser polyedrischen oligomeren Silizium-Sauerstoff-Clustereinheiten das Verhalten des erfindungsgemäßen Vernetzers gesteuert und damit auch die Eigenschaften der resultierenden Matrix beeinflusst werden. Der erfindungsgemäße Vernetzer kann mit sich selbst reagieren und somit ein eigenes Netzwerk in der Matrix ausbilden, das aus den resultierenden Struktureinheiten des erfindungsgemäßen Vernetzers besteht, oder aber der erfindungsgemäße Vernetzer kann mit seinen funktionellen Gruppen mit den funktionellen Gruppen des Matrixmaterials reagieren und somit eine Vernetzung des Matrixmaterials leisten. Im Sinne der vorliegenden Erfindung können die erfindungsgemäßen Vernetzer auch als Härter eingesetzt werden.

Der erfindungsgemäße Vernetzer zur Vernetzung von Matrixmaterialien zeichnet sich dadurch aus, dass der Vernetzer funktionalisierte polyedrische oligomere Silizium-Sauerstoff-Clustereinheiten aufweist, gemäß der Formel

[(RₐX_{b}SiO_{1,5})ₘ (R_{c}X_{d}SiO)ₙ (RₑX_{f}Si₂O_{2,5})ₒ (R_{g}XₕSi₂O₂)ₚ]

mit a, b, c = 0-1; d = 1-2; e, f, g = 0-3; h = 1-4; m+n+o+p ≥ 4; a+b = 1; c+d = 2; e+f = 3 und g+h = 4;
- **R** =: Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
- **X** =: Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R,**
aufweist,
wobei die Substituenten vom Typ **R** gleich oder unterschiedlich sind und die Substituenten vom Typ **X** gleich oder unterschiedlich sind.

Der Einsatz von erfindungsgemäßen Vernetzern, die funktionalisierte polyedrische oligomere Silizium-Sauerstoff-Clustereinheiten aufweisen, bei organischen Matrixmaterialien hat nicht nur eine Erhöhung der mechanischen Stabilität und Festigkeit der daraus resultierenden Werkstoffe zur Folge, sondern auch eine Erhöhung der thermischen Stabilität. Zudem lässt sich die Elastizität von anorganischen Werkstoffen durch die Verwendung von chemischen Verbindungen mit funktionalisierten polyedrischen oligomeren Silizium-Sauerstoff-Clustereinheiten als vernetzendes Mittel steigern. Im Gegensatz zu vielen herkömmlichen Vernetzern kann über die Substituenten der funktionalisierten polyedrischen oligomeren Silizium-Sauerstoff-Clustereinheiten das Verhalten des erfindungsgemäßen Vernetzers gesteuert und damit auch die Eigenschaften des daraus resultierenden Werkstoffes beeinflusst werden. Die physikalischen und chemischen Eigenschaften des erfindungsgemäßen Vernetzers lassen sich somit gezielt voreinstellen. Die Polarität des erfindungsgemäßen Vernetzers kann über die Substituenten vom Typ **R** und Typ **X** an den polyedrischen oligomeren Silizium-Sauerstoff-Clustereinheiten eingestellt werden. Über die unterschiedliche Struktur und Polarität dieser Substituenten kann gesteuert werden, ob die polyedrischen oligomeren Silizium-Sauerstoff-Clustereinheiten mehr anorganischen oder mehr organischen Charakter aufweisen. Die erfindungsgemäßen Vernetzer können je nach Struktur thermisch sehr stabil sein. Durch die Käfigstruktur der polyedrischen oligomeren Silizium-Sauerstoff-Clustereinheiten sind nur wenige funktionelle Gruppen zur Anbindung der Vernetzermoleküle notwendig, da mit einer funktionalisierten Gruppe ein gesamter "Käfig" angebunden werden kann.

Bevorzugt sind Vernetzer, deren funktionalisierte polyedrische oligomere Silizium-Sauerstoff-Clustereinheit auf der Struktur **3** 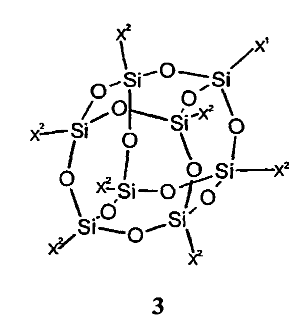 basiert,
mit
- **X**^{**1**} =: Substituent vom Typ **X** oder vom Typ **-O-SiX**_{**3**}**, X**^{**2**} = Substituent vom Typ **X,** vom Typ **-O-SiX**_{**3**}, vom Typ **R,** vom Typ **-O-SiX**_{**2**}**R,** vom Typ **-O-SiXR**_{**2**} oder vom Typ **-O-SiR**_{**3**},
- **R =**: Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
- **X =**: Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R.**

Die Substituenten vom Typ **X** der funktionalisierten polyedrischen oligomeren Silizium-Sauerstoff-Clustereinheiten weisen bevorzugt Isocyanatreste, blockierte Isocyanatreste, Amino-, Acrylat-, Methacrylat-, Alkoxysilyl-, Alkoxysilylalkyl-, Hydroxy und/oder Epoxyreste auf. Die Funktionalisierung der polyedrischen oligomeren Silizium-Sauerstoff-Clustereinheiten des erfindungsgemäßen Vernetzers geschieht über die Substituenten vom Typ **X**. Für bestimmte Anwendungsgebiete, wie z.B. bei Lacken, können Vernetzer mit blockierten bzw. verkappten Isocyanatgruppen eingesetzt werden. Bei dem erfindungsgemäßen Vernetzer kann diese Funktionalität durch die Wahl der Substituenten vom Typ **X** gesteuert werden. Für das Anwendungsgebiet der Lacke können bevorzugt Vernetzer, die polyedrische oligomere Silizium-Sauerstoff-Clustereinheiten mit blockierten bzw. verkappten Isocyanatgruppen als Substituenten vom Typ **X** aufweisen, eingesetzt werden. Die Herstellung dieser erfindungsgemäßen Vernetzer kann, z.B. über eine Ringbildung, wobei zwei Isocyanatmoleküle ein Uretdion bzw. drei Isocyanatmoleküle ein Isocyanurat bilden oder über eine Blockierung, z.B. mit Caprolactam, Phenolen oder Malonsäure, geschehen.

In einer besonderen Ausführungsform des erfindungsgemäßen Vernetzers sind mindestens zwei der Substituenten vom Typ **X,** in einer besonders bevorzugten Ausführungsform des Vernetzers sind mindestens zwei der Substituenten vom Typ **X** gleich.

Aufgrund ihres molekularen Charakters besitzen die erfindungsgemäßen Vernetzer ein einheitliches und definiertes Molekulargewicht. In einer besonderen Ausführungsform des erfindungsgemäßen Vernetzers weist dieser bevorzugt ein Molekulargewicht von mindestens 400 g/mol, besonders bevorzugt 700 bis 3000 g/mol und ganz besonders bevorzugt 800 bis 1500 g/mol auf.

Die Molekülgröße des erfindungsgemäßen Vernetzers kann erhöht werden, indem man mehrere funktionalisierte polyedrische oligomere Silizium-Sauerstoff-Clustereinheiten mittels Kondensation, z.B. über einen Spacer und/oder den funktionellen Gruppen des Substituenten vom Typ **X,** verbindet. Des weiteren kann man eine Vergrößerung des erfindungsgemäßen Vernetzers durch eine Homo- oder Copolymerisation erreichen. Auch ein Grafting, d. h. die Fixierung des erfindungsgemäßen Vernetzers an ein größeres Molekül oder Polymer, ist möglich. Beispielsweise können die polyedrischen oligomeren Silizium-Sauerstoff-Clustereinheiten über eine Hydrosilylierung mit Polymeren verbunden werden. So wird es möglich, Moleküle von über 5 nm molekularer Größe (maximale Ausdehnung des erfindungsgemäßen Vernetzers) herzustellen. Ebenso kann es vorteilhaft sein, wenn der erfindungsgemäße Vernetzer eine molekulare Größe von 0,1 bis 500 nm, vorzugsweise von 0,5 bis 50 nm und ganz besonders bevorzugt von 1 bis 25 nm aufweist. Um die Molekülgröße des erfindungsgemäßen Vernetzers zu vergrößern, können Dendrimer-Strukturen oder hyperbranched-Strukturen eingesetzt werden.

In einer weiteren Ausführungsform kann der erfindungsgemäße Vernetzer weitere Verbindungen mit vernetzenden Eigenschaften aufweisen, wobei diese Kombination von verschiedenen Vernetzern zumindest einen Vernetzer aufweist, der funktionalisierte polyedrische oligomere Silizium-Sauerstoff-Clustereinheiten aufweist.

Bei den polyedrischen oligomeren Silizium-Sauerstoff-Clustereinheiten handelt es sich insbesondere um die Verbindungsklasse der Sphärosilikate gemäß der Formel

[(RₑX_{f}Si₂O_{2,5})ₒ (R_{g}XₕSi₂O₂)ₚ]

mit e, f, g = 0-3; h = 1-4; o+p ≥ 4; e+f = 3 und g+h = 4,
bevorzugt jedoch um die Verbindungsklasse der Silasesquioxane gemäß der Formel

[(RₐX_{b}SiO_{1,5})ₘ (R_{c}X_{d}SiO)ₙ]

mit a, b, c = 0-1; d = 1-2; m+n ≥ 4; a+b = 1; c+d = 2.

Besonders bevorzugt sind Vernetzer, die auf der funktionalisierten oligomeren Silasesquioxaneinheit der Struktur **4, 5** oder **6** basieren, 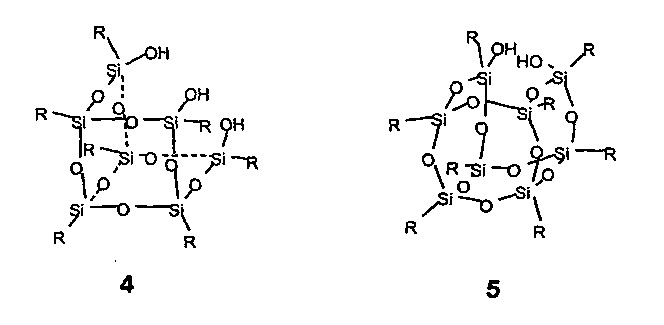 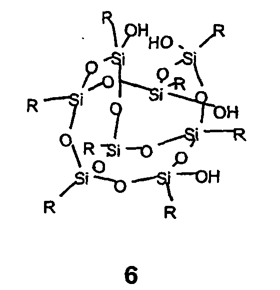 mit
- **R** =: Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte oligomere Silasesquioxaneinheiten, die über eine Polymereinheit oder eine Brückeneinlleit angebunden sind, wobei die Silasesquioxaneinheit über mindestens zwei Hydroxylgruppen funktionalisiert ist

Die Substituenten vom Typ **R** der Silasesquioxaneinheiten können alle identisch sein, daraus ergibt sich eine sogenannte funktionalisierte homoleptische Struktur gemäß

[(RSiO_{1,5})ₘ(RXSiO)ₙ] 7

mit m + n = z und z ≥ 4, wobei z der Anzahl der Siliziumatome in der Gerüststruktur der polyedrischen oligomeren Silizium-Sauerstoff-Clustereinheit entspricht und
- **R =**: Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
- **X** =: Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R,** wobei die Substituenten vom Typ **R** gleich oder unterschiedlich sind und die Substituenten vom Typ **X** gleich oder unterschiedlich sind.

In einer weiteren Ausführungsform des Vernetzers weist die Silasesquioxaneinheit eine funktionalisierte heteroleptische Struktur auf, wobei mindestens zwei der Substituenten vom Typ **R** gemäß Struktur 7 unterschiedlich sind.

Die erfindungsgemäßen Vernetzer, die funktionalisierte oligomere Silasesquioxaneinheiten aufweisen, können durch die Umsetzung von Silasesquioxanen mit freien Hydroxygruppen mit monomeren funktionalisierten Silanen der Struktur **Y**_{**3**}**Si-X**^{**I**}**, Y**_{**2**}**SiX**^{**I**}**X**^{**II**} und **YsiX**^{**I**}**X**^{**II**}**X**^{**III**} erhalten werden, wobei der Substituent **Y** eine Abgangsgruppe ist, ausgewählt aus Alkoxy-, Carboxy-, Halogen-, Silyloxy- oder Aminogruppe, die Substituenten **X**^{**I**}**, X**^{**II**} und **X**^{**III**} vom Typ **X** sind und gleich oder unterschiedlich sind, mit **X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierter Isocyanat-, Acrylat-, Methacrylat-, Nitril-, Amino-, Phosphingruppe oder mindestens eine solche Gruppe vom Typ **X** aufweisenden Substituenten vom Typ **R** und **R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte oligomere Silasesquioxaneinheiten, die über eine Polymereinheit oder eine Brückeneinheit angebunden sind.

Eine erfindungsgemäße Matrix zeichnet sich allgemein dadurch aus, dass sie mittels zumindest eines erfindungsgemäßen Vernetzers vemetzt wurde. Die Matrix weist bevorzugt von 0,05 bis 100 Gew.-%, vorzugsweise von 0,1 bis 50 Gew.-% des erfindungsgemäßen Vernetzers, besonders bevorzugt von 1 bis 30 Gew.-% und ganz besonders bevorzugt von 3 bis 25 Gew.-% des erfindungsgemäßen Vernetzers auf. Bevorzugt kann auch eine Matrix sein, die mittels einer Kombination von verschiedenen Vernetzern, die zumindest einen erfindungsgemäßen Vernetzer aufweist, vemetzt wurde. Das Matrixmaterial weist bei der Verwendung von einer Kombination von Vernetzern eine Zusatzmenge an dem erfindungsgemäßen Vernetzer bezogen auf das zu vernetzende Matrixmaterial bevorzugt von 0,1 bis 25 Gew.-%, besonders bevorzugt von 1 bis 20 Gew.-% und ganz besonders bevorzugt von 5 bis 15 Gew.-% auf. Das Matrixmaterial kann im Falle von einer Kombination von Vernetzern eine dem Stand der Technik gemäße Menge an herkömmlichen Vernetzern aufweisen. Beispielsweise können erfindungsgemäße Vernetzer, die mit Isocyanatgruppen funktionalisierte oligomere Silasesquioxaneinheiten aufweisen, in einem beliebigen Verhältnis mit herkömmlichen Vernetzern auf Isocyanatbasis kombiniert und zur Vernetzung von Hydroxylgruppen-aufweisenden Polyestern eingesetzt werden. Als herkömmliche Vernetzer auf Isocyanatbasis können Isophorondiisocyanat (IPDI), 2,4- und 2,6-Toluylendiisocyanat (TDI), Naphthylen-1,5-diisocyanat (NDI), Diphenylmethan-4,4'-diisocyanat (MDI), Triphenylmethan-4,4',4"-triisocyanat und/oder Hexamethylendiisocyanat (HDI) verwendet werden. Erfindungsgemäß ist es aber auch möglich, dass die Matrix ausschließlich den erfindungsgemäßen Vernetzer aufweist, der in diesem Fall die Funktion des Matrixmaterials und des Vernetzers in sich vereinigt.

Die Matrix kann organische und/oder anorganische Matrixmaterialien aufweisen. Das anorganische Matrixmaterial der Matrix dient bevorzugt zur Herstellung von Gläsern, mineralischen Baustoffen und/oder anorganische Sintermassen. Die Matrix kann jedoch auch ein Elastomer, thermo- oder duroplastischen Kunststoff aufweisen. Besonders bevorzugt wird ein organisches Matrixmaterial, das ein Polymer aufweist, das aus Polyethylen, Polypropylen, Polyester, Copolyester, Polycarbonat, Polyamid, Copolyamid, Polyurethan, Polyacrylat, Polymethacrylat, Polymethacrylatcopolymer, Polysiloxan, Polysilan, Polytetrafluorethylen, Phenolharz, Polyoxymethylen, Epoxidharz, Polyvinylchlorid, Vinylchloridcopolymer, Polystyrol, Copolymeren des Styrols, ABS-Polymer, Alkydharz, ungesättigtem Polyesterharz, Nitrocelluloseharz oder Kautschuk ausgewählt ist, eingesetzt.

Eine besondere Ausführungsform der erfindungsgemäßen Matrix weist eine organische Matrix auf, ausgewählt aus Kohlenwasserstoffharzen, Polyamidharzen, Alkydharzen, Maleinatharzen, Polyacrylaten, Harnstoffharzen, Polyterpenharzen, Keton-Aldehydharzen, Epoxidharzen, Phenolharzen, Polyestern und Polyurethansystemen, Cellulosederivaten, Harze auf Kolophoniumbasis, Schellack und Dammar sowie alle von vorgenannten Harzen abgeleiteten Derivaten. Eine solche Matrix eignet sich bevorzugt für die Herstellung von Lack- und Druckfarbensystemen, besonders bevorzugt auch für die Herstellung von Pulverlacken.

In einer besonderen Ausführungsform der Matrix bildet der erfindungsgemäße Vernetzer bevorzugt mindestens eine, besonders bevorzugt zwei und ganz besonders bevorzugt mehr als zwei kovalente Bindungen zu dem Matrixmaterial aus. Hierfür müssen die reaktiven Substituenten vom Typ **X** des erfindungsgemäßen Vernetzers und die reaktiven funktionellen Gruppen beim zu vernetzenden Matrixmaterial aufeinander abgestimmt sein. So kann sowohl das Matrixmaterial als auch der erfindungsgemäße Vernetzer Doppelbindungen, Hydroxyl-, Carboxyl-, Amino-, Isocyanat- oder Epoxygruppen enthalten. Durch Strahlung, Temperatur, Feuchtigkeitszugabe oder Zugabe eines Initiators wird die Reaktion zwischen dem Matrixmaterial und dem erfindungsgemäßen Vernetzer eingeleitet, so dass es zur Ausbildung von kovalenten Bindungen kommt. Als Strahlung kann für das Starten des Vernetzungsprozesses Elektronen-, UV- oder Mikrowellenstrahlung verwendet werden.

Bei unpolaren Matrixmaterialien, die keine reaktiven funktionellen Gruppen für eine kovalente Anbindung des erfindungsgemäßen Vernetzers an das Matrixmaterial aufweisen, reagiert der erfindungsgemäße Vernetzer bevorzugt mit sich selbst und bildet somit ein eigenes Netzwerk in der Matrix aus, das aus den resultierenden Struktureinheiten des erfindungsgemäßen Vernetzers besteht. Die Initialisierung des Vernetzungsprozesses kann in diesem Falle ebenfalls mittels Feuchtigkeit, Elektronen-, UV- oder Mikrowellenstrahlung erfolgen.

Der erfindungsgemäße Vernetzer kann zur Vernetzung einer anorganischen Matrix zur Herstellung von Gläsern, Keramiken, Beton, Mörtel, Putz und/oder mineralischen Baustoffen verwendet werden. Ebenso kann dieser erfindungsgemäße Vernetzer zur Herstellung von Kunststoffen, Lacken, Farben, wie z.B. Druckfarben, Klebstoffen, Dichtungsmassen, Gießmassen, Spachtelmassen, Streichmassen, Schaumstoffen und Beschichtungen, die sowohl mit organischen als auch anorganischen bzw. metallischen Werkstoffen verwendet werden können, verwendet werden.

Beim Einbringen des erfindungsgemäßen Vernetzers mit Alkoxylsilyl- oder Alkoxysilylalkylgruppen funktionalisierten polyedrischen oligomeren Silizium-Sauerstoff-Clustereinheiten in mineralischen Stoffe, wie z.B. in Putzen, weist der erfindungsgemäße Vernetzer vorzugsweise eine zur Haftung zu mineralischen Stoffen befähigte Gruppe auf, die z.B. mit den Hydroxylgruppen des mineralischen Stoffes reagieren kann.

Diese besondere Ausführungsform des erfindungsgemäßen Vernetzers mit Alkoxysilyl- oder Alkoxysilylalkylgruppen funktionalisierten polyedrischen oligomeren Silizium-Sauerstoff-Clustereinheiten kann als Vernetzer von organischen Beschichtungen auf Gläser verwendet werden. Dieser Vernetzer kann sowohl die Beschichtung vernetzen als auch mit den Hydroxylgruppen des Glases reagieren und man erhält somit eine gute Haftung der Beschichtung am Glas. Der erfindungsgemäße Vernetzer kann auch für Beschichtungen von Keramiken verwendet werden.

Für die Herstellung von Beschichtungen für Gläser, aber auch für die Beschichtung von Kunststoffen, können erfindungsgemäße Vernetzer, die mit Acrylat- oder Methacrylatgruppen funktionalisierte polyedrische oligomere Silizium-Sauerstoff-Clustereinheiten aufweisen, verwendet werden. Die für die Beschichtung verwendete Mischung weist vorzugsweise von 0,05 bis 100 Gew.-%, bevorzugt von 5 bis 95 Gew.-% und besonders bevorzugt von 10 bis 60 Gew.-% des erfindungsgemäßen Vernetzers auf. Die verbleibende Menge kann ein organisches Lösungsmittel, in dem der erfindungsgemäße Vernetzer gelöst oder dispergiert werden kann, ein Treib- oder Trägergas und/oder ein geeignetes organisches Matrixmaterial, das z.B. zusammen mit dem Vernetzer ein mehrdimensionales Netzwerk, z.B. durch Polymerisation, ausbilden kann, sein. Geeignete Treib- oder Trägergase sind vorzugsweise Propan, Butan, Dimethylether, fluorierte Kohlenwasserstoffe, Stickstoff, Distickstoffmonoxid, Luft und/oder gasförmiges Kohlendioxid. Als Lösungsmittel können beispielsweise Aliphate, Cycloaliphate, halogenierte Kohlenwasserstoffe, cyclische oder acyclische Ether verwendet werden. Die Applikation der Beschichtung erfolgt entweder durch Aufstreichen, durch Aufspritzen, z.B. mittels "Airless-Geräte" oder Druckluftpistolen, die einen Druck von 2 bis 20 bar und einen Düsendurchmesser von 0,2 bis 1,0 mm aufweisen, oder durch Aufsprühen, z.B. mittels Spraydosen, die einen Druck von 1,2 bis 10 bar und einen Düsendurchmesser von 0,2 bis 1,0 mm aufweisen.

Erfindungsgemäße Vernetzer, die mit Isocyanatgruppen funktionalisierte polyedrische oligomere Silizium-Sauerstoff-Clustereinheiten aufweisen, können - auch in Kombination mit herkömmlichen Vernetzern auf Isocyanatbasis - zur Vernetzung von Polyolen und/oder Hydroxygruppen-aufweisenden Polyestern eingesetzt werden. Auf diese Weise entstehen Lacke, z.B. Pulverlacke, aber auch Gieß-, Streich- und Spachtelmassen, sowie Klebstoffe, Schaumstoffe und Dichtungsmassen.

Die Funktionalisierung der polyedrischen oligomeren Silizium-Sauerstoff-Clustereinheiten des erfindungsgemäßen Vernetzers mit einer Epoxygruppe ermöglicht es, in Verbindung mit Hydroxylgruppen- oder Aminogruppen-aufweisenden Polyestern neuartige Epoxysysteme für Lacke, Gießmassen und Klebstoffe herzustellen.

Aus Hydroxylgruppen-aufweisenden Polyestern können in Kombination mit den erfindungsgemäßen Vernetzern, die mit Hydroxylgruppen funktionalisiert sind, reaktive Hotmelts und Hotmeltadhesives bzw. Klebstoffe mit verbesserter mechanischer Stabilität und Festigkeit, verbesserter Lösemittelbeständigkeit sowie höherer Temperaturbeständigkeit hergestellt werden. Unter Dynacoll 7000® werden von Degussa Hydroxylgruppenaufweisende Polyester geliefert, die beim Klebstoffhersteller je nach gewünschtem Vernetzungsgrad mit Diisocyanaten, wie z.B. MDI oder IPDI, umgesetzt werden. Beim Kunden werden diese als Hotmeltadhesiv oder als Schmelzklebstoff appliziert, wobei durch Aufnahme von Luftfeuchtigkeit, ein Teil der freien Isocyanatgruppen ein Amin bilden und diese mit den verbleibenden Isocyanatgruppen zu einem substituierten Harnstoff abreagieren und auf diese Weise eine nachträgliche Polymerisation und Vernetzung des Schmelzklebstoffs stattfindet (Huber, Müller, Adhesives Age, November 1987, 32). Durch Zusatz von mit Hydroxylgruppen funktionalisierten erfindungsgemäßen Vernetzern und weiterem Zusatz von Diisocyanat bzw. Neubemessung (d.h. dass zusätzlich über einen Hydroxylgruppen-aufweisenden Vernetzer in die Matrix eingebrachte Hydroxylgruppen bei der Bemessung der Isocyanatmenge insgesamt zu berücksichtigen sind) der Menge an Diisocyanat, um somit das gewünschte Verhältnis 1 :1 von Hydroxylgruppen zu Isocyanatgruppen einzuhalten, können Verklebungen mit extrem verbesserter mechanischen Stabilität, Festigkeit, Lösemittel- und Temperaturbeständigkeit erhalten werden.

Durch Anbindung der Epoxygruppe an eine polyedrische oligomere Silizium-Sauerstoff-Clustereinheit des erfindungsgemäßen Vernetzers können in Verbindung mit Hydroxylgruppen- oder Aminogruppen-aufweisenden Polyestern einerseits neuartige Epoxysysteme für Lacke, Gießmassen und Klebstoffe hergestellt werden, andererseits können über die Funktionalisierung einer polyedrischen oligomeren Silizium-Sauerstoff-Clustereinheit des erfindungsgemäßen Vernetzers mit einer Aminogruppe die bekannten Systeme aus 1-Chlor-2,3-epoxypropan und Bisphenol A gehärtet werden. Solch eine Matrix wird in herkömmlicherweise mit Aminen, wie z.B. Isophorondiamin (IPDA), Diethylentriamin (DETA), Triethylentetramin (TETA) oder Tetraethylenpentamin (TEPA) vernetzt. Auch hier ist es möglich, mit Epoxy- oder Aminogruppen funktionalisierte erfindungsgemäßen Vernetzers mit anderen Vernetzern bzw. Härtern in jedem Verhältnis zu kombinieren.

Eine besondere Verwendungsweise der erfindungsgemäßen Vernetzer können Beschichtungen von Chips der Computerindustrie sein. Die erfindungsgemäßen Systeme können ausgezeichnete Isolatoreigenschaften (niedrige Dielektrizitätskonstante) aufweisen, so dass sich keine nennenswerte Kapazität zwischen zwei Leiterbahnen aufbauen kann. Der Fachmann spricht in diesem Fall von einem sog. niedrigen k-Wert, einer niedrigen elektrischen Permittivität. Die erfindungsgemäßen Systeme können demnach ausgezeichnete Voraussetzungen mitbringen, um für Computerchips verwendet zu werden. Bevorzugt stellt in diesem Fall der erfindungsgemäße Vernetzer auch die organische Matrix selbst dar, so dass eine Fremdmatrix nicht zwingend erforderlich ist.

Das erfindungsgemäße Verfahren zur Vernetzung von Matrixmaterialien zu einer festen Matrix zeichnet sich dadurch aus, dass ein erfindungsgemäßer Vernetzer eingesetzt wird. Die einzelnen Verfahrensschritte können wie bei herkömmlichen Vernetzungsprozessen durchgeführt werden. Es bedarf keiner speziellen Verfahrensschritte, um die gewünschte Matrix zu erhalten.
Die folgenden Beispiele sollen die Erfindung näher erläutern ohne ihren Schutzumfang einzuschränken:

### Beispiele 1: Herstellung der Silasesquioxane

### Beispiel 1.1: Synthese von (Isobutyl)₈Si₈O₁₂ aus (Isobutyl)Si(OMe)₃

Zu einer Lösung von 446 g (2.5 mol) Isobutyltrimethoxysilan (Isobutyl)Si(OMe)₃ in 4300 ml Aceton wird unter Rühren eine Lösung von 6.4 g (0.11 mol) KOH in 200 ml H₂O gegeben.

Das Reaktionsgemisch wird daraufhin 3 Tage bei 30 °C gerührt. Der entstehende Niederschlag wird abfiltriert und bei 70 °C im Vakuum getrocknet. Das Produkt (Isobutyl)₈Si₈O₁₂ wird in einer Ausbeute von 262 g (96 %) erhalten.

### Beispiel 1.2: Synthese von (Isobutyl)₇Si₇O₉(OH)₃ aus (Isobutyl)₈Si₈O₁₂

### (Beispiel für die Synthese eines unvollständig kondensierten Silasesquioxans mit drei freien Hydroxylgruppen)

Bei einer Temperatur von 55 °C werden 55 g (63 mmol) (Isobutyl)₈Si₈O₁₂ in 500 ml eines Aceton-Methanol-Gemisches (Volumenverhältnis 84:16) gegeben, welches 5.0 ml (278 mmol) H₂O und 10.0 g (437 mmol) LiOH enthält. Das Reaktionsgemisch wird daraufhin 18 h bei 55 °C gerührt und danach zu 500 ml 1n Salzsäure gegeben. Nach 5 Minuten Rühren wird der erhaltene Feststoff abfiltriert und mit 100 ml CH₃OH gewaschen. Nach Trocknen an Luft werden 54.8 g (96 %) (Isobutyl)₇Si₇O₉(OH)₃ erhalten.

### Beispiel 1.3: Synthese von (Isobutyl)₇Si₇O₉(OSiMe₃)(OH)₂

### (Beispiel für die Synthese eines unvollständig kondensierten Silasesquioxans mit zwei freien Hydroxylgruppen)

Diese Verbindung wird durch Umsetzung des Trisilanols (Isobutyl)₇Si₇O₉(OH)₃ (aus Beispiel 1.2) mit dem Chlorsilan ClSi(Me)₃unter Verwendung einer Base, wie Triethylamin, mit THF als Lösemittel bei einer Temperatur von 20 °C hergestellt. Dabei wird über Nacht gerührt.

### Beispiel 1.4: Synthese von (Isobutyl)₇Si₇O₉(OSiMe₃)[OSiMe₂(CH₂)₃NCO]₂ ausgehend von (Isobutyl)₇Si₇O₉(OSiMe₃)(OH)₂

### (Beispiel für ein funktionalisiertes Silasesquioxan mit zwei Isocyanat-Endgruppen)

Zu einer Lösung von 10 g (11.6 mmol) (Isobutyl)₇Si₇O₉(OSiMe₃)(OH)₂ in 50 ml THF, die 7 ml Triethylamin (Et₃N) enthält, werden bei einer Temperatur von 20 °C 4.29 g (25 mmol) 3-Isocyanatopropyldimethylchlorsilan zugegeben. Die Mischung wird über Nacht gerührt. Danach wird das Lösemittel im Vakuum entfernt. Das Produkt wird durch Extraktion mit 2 x 100 ml Hexan isoliert. Der Extrakt wird im Vakuum zu einem dicken Öl gestrippt, danach in 20 ml Toluol aufgenommen und durch Zugabe von 100 ml Acetonitril ausgefällt. Die Ausbeute des Produktes beträgt 85 %.

### Beispiel 1.5: Synthese von (Isobutyl)₇Si₇O₉[OSiMe₂(CH₂)₃NCO]₃ ausgehend von (Isobutyl)₇Si₇O₉(OH)₃

### (Beispiel für ein funktionalisiertes Silasesquioxan mit drei Isocyanat-Endgruppen)

Zu einer Lösung von 10 g (12.6 mmol) (Isobutyl)₇Si₇O₉(OH)₃ in 50 ml THF, die 10 ml Triethylamin (Et₃N) enthält, werden bei einer Temperatur von 20 °C 6.87 g (40 mmol) 3-Isocyanatopropyldimethylchlorsilan zugegeben. Die Mischung wird über Nacht gerührt. Danach wird das Lösemittel im Vakuum entfernt. Das Produkt wird durch Extraktion mit 2 x 100 ml Hexan isoliert. Der Extrakt wird im Vakuum zu einem dicken Öl gestrippt, danach in 20 ml Toluol aufgenommen und durch Zugabe von 100 ml Acetonitril ausgefällt. Die Ausbeute des Produktes beträgt 89 %.

### Beispiel 1.6: Synthese von (Isobutyl)₇Si₇O₉(OSiMe₃)[OSiMe₂(CH₂)₃NH₂]₂ ausgehend von (Isobutyl)₇Si₇O₉(OSiMe₃)(OSiMe₂H)₂ (von Hybrid Plastics)

### (Beispiel für ein funktionalisiertes Silasesquioxan mit zwei Amino-Endgruppen)

Zu einer Lösung von 4.0 g (4.1 mmol) (Isobutyl)₇Si₇O₉(OSiMe₃)(OSiMe₂H)₂ in 25 ml Toluol werden bei einer Temperatur von 20 °C 0.51 g (9.0 mmol) Allylamin und 50 mg eines Platindivinyltetramethyldisiloxan-Komplexes in Xylol (von ABCR Gelest GmbH & Co KG) zugegeben. Die Mischung wird über Nacht gerührt. Danach wird das Lösemittel im Vakuum entfernt. Das Produkt wird durch Zugabe von 150 ml Acetonitril ausgefällt, abfiltriert und mit 2 x 20 ml Acetonitril gewaschen. Die Ausbeute des Produktes beträgt 71 %.

### Beispiel 1.7: Synthese von (Isobutyl)₇Si₇O₉[OSiMe₂(CH₂)₃NH₂]₃ ausgehend von (Isobutyl)₇Si₇O₉[OSiMe₂H]₃ (= SH1307 von Hybrid Plastics)

### (Beispiel für ein funktionalisiertes Silasesquioxan mit drei Amino-Endgruppen)

Zu einer Lösung von 3.96 g (4.1 mmol) (Isobutyl)₇Si₇O₉[OSiMe₂H]₃ in 25 ml Toluol werden bei einer Temperatur von 20 °C 0.80 g (14 mmol) Allylamin und 50 mg eines Platindivinyltetramethyldisiloxan-Komplexes in Xylol (von ABCR Gelest GmbH & Co KG) zugegeben. Die Mischung wird über Nacht gerührt. Danach wird das Lösemittel im Vakuum entfernt. Das Produkt wird durch Zugabe von 150 ml Acetonitril ausgefällt, abfiltriert und mit 2 x 20 ml Acetonitril gewaschen. Die Ausbeute des Produktes beträgt 66 %.

### Beispiel 1.8: Synthese von (Isobutyl)₇Si₇O₉(OSiMe₃)[OSiMe₂(CH₂)₃OCOC(Me)=CH₂]₂ ausgehend von (Isobutyl)₇Si₇O₉(OSiMe₃)(OH)₂

### (Beispiel für ein funktionalisiertes Silasesquioxan mit zwei Methacrylat-Endgruppen)

Zu einer Lösung von 10 g (11.6 mmol) (Isobutyl)₇Si₇O₉(OSiMe₃)(OH)₂ in 50 ml THF, die 7 ml Triethylamin enthält, werden bei einer Temperatur von 20 °C 5.52 g (25 mmol) 3-Methacryloxypropyldimethylchlorsilan zugegeben. Die Mischung wird über Nacht gerührt. Danach wird das Lösemittel im Vakuum entfernt. Durch Extraktion mit 2 x 100 ml Hexan wird das Produkt isoliert. Der Extrakt wird im Vakuum zu einem dicken Öl gestrippt, danach in 20 ml Toluol aufgenommen und durch Zugabe von 100 ml Acetonitril ausgefällt. Die Ausbeute des Produktes beträgt 85 %.

### Beispiel 1.9: Synthese von (Isobutyl)₇Si₇O₉[OSiMe₂(CH₂)₃OCOC(Me)=CH₂]₃ ausgehend von (Isobutyl)₇Si₇O₉(OH)₃

### (Beispiel für ein funktionalisiertes Silasesquioxan mit drei Methacrylat-Endgruppen)

Zu einer Lösung von 10 g (12.6 mmol) (Isobutyl)₇Si₇O₉(OH)₃ in 50 ml THF, die 10 ml Triethylamin enthält, werden bei einer Temperatur von 20 °C 8.83 g (40 mmol) 3-Methacryloxypropyldimethylchlorsilan zugegeben. Die Mischung wird über Nacht gerührt. Danach wird das Lösemittel im Vakuum entfernt. Das Produkt wird mit 2 x 100 ml Hexan extrahiert. Der Extrakt wird in Vakuum zu einem dicken Öl gestrippt, danach in 20 ml Toluol aufgenommen und durch Zugabe von 100 ml Acetonitril ausgefällt. Die Ausbeute des Produktes beträgt 85 %.

### Beispiel 2: Prüfungen

### Beispiel 2.1: Prüfung als Schmelzklebstoffbeschichtung

In einem Dreihals-Rundkolben werden 1 Mol Polyester entsprechend der Zusammensetzung von Tabelle 2.1.1 mit einer Hydroxylzahl von 30 bei einer Temperatur von 130 °C aufgeschmolzen und durch Anlegen eines Vakuums 30 min entgast. Danach werden bei einer Temperatur von 120 °C unter Rühren 2,2 Mol Diisocyanat bzw. Triisocyanat zugegeben und homogenisiert. Zur vollständigen Umsetzung der Komponenten wird bei 120 °C unter Ausschluss von Feuchtigkeit weiter gerührt.

### Abbindezeit

Zur Messung der Abbindezeit wird der Schmelzklebstoff aus der 120 °C heißen Schmelze auf einen Holzquader von 25 x 25 mm dünn aufgetragen und sofort anschließend mit einem zweiten Holzquader der gleichen Grundfläche gefügt bzw. zum Verkleben gebracht. Die Abbindezeit gibt an, wie lange die Holzstückchen sich mittels kräftigem Fingerdruck noch gegeneinander verschieben lassen. Je geringer die Zeitspanne ist, desto günstiger ist das Abbindeverhalten des Schmelzklebstoffs.

### Verklebungsversuche

Erfindungsgemäße bzw. nicht erfindungsgemäße Polymerzusammensetzungen gemäß der Beispiele 2.1 werden nach ihrer Herstellung bei einer Temperatur von 120 °C auf einem Holzprüfkörper appliziert. Dieser wird innerhalb von 0,5 Minuten auf einer Fläche von 4 cm² mit einem weiteren Holzprufkörper einfach überlappend zusammengefügt und 5 Minuten mit einem Gewicht von 2 kg aneinander gepresst. Anschließend lagert man das Verklebungsmuster 14 Tage bei 23 °C und 60 % relativer Luftfeuchtigkeit und führt dann eine Zugprüfung und eine Wärmestandfestigkeit durch. Die Ergebnisse sind in Tabelle 2.1.1 dargestellt.

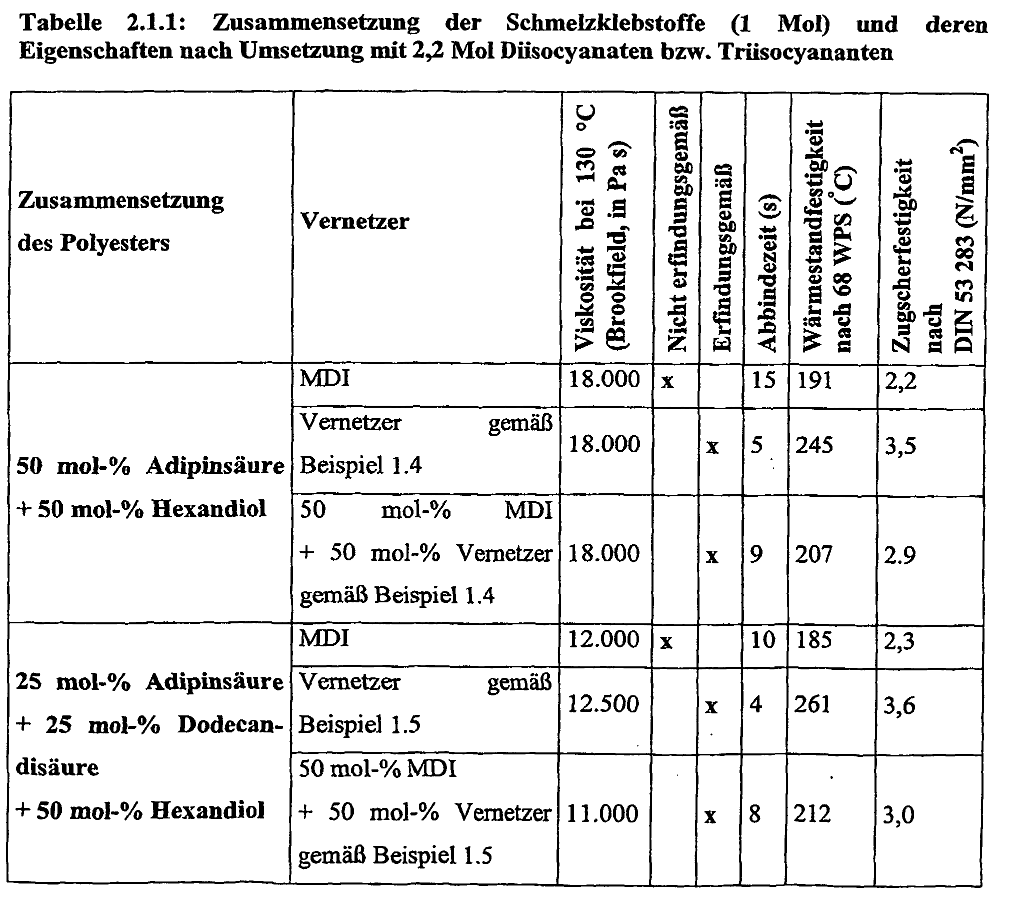

Es zeigt sich, dass durch Verwendung der erfindungsgemäßen Vernetzer gegenüber herkömmlichen Vernetzern sich die Abbindezeit verkürzt und die Zugscherfestigkeit und Wärmestandfestigkeit deutlich verbessert werden können.

### Beispiel 2.2: Prüfung in Gießharzsystemen

Als Gießharze können Epoxidharzsysteme verwendet werden, deren Basis üblicherweise Bisphenol-A-diglycidylether und aminische Härter, wie z.B. Isophorondiamin (IPDA), sind. In aller Regel ist es zum Erhalt optimaler Eigenschaften wichtig, einen möglichst hohen Aushärtungsgrad zu erzielen. Deswegen werden zweckmäßigerweise zwei Arten von Reaktionsbeschleunigern eingesetzt, nämlich solche zur Steuerung der Bearbeitungszeit (Topfzeit) und solche zur Beeinflussung der Vernetzungsdichte. Außerdem wird angestrebt, die maximale Temperatur bei der Aushärtung zu erniedrigen, weil damit die Reduzierung des Schrumpfes einhergeht. DE 42 11 454 beschreibt ein Verfahren zur Herstellung und der Anwendung von Isophorondiamin, das zu 59 % in trans-Form und zu 41 % in cis-Form vorliegt.
Durch den Einsatz von Produkten aus den Beispielen 1.6 und 1.7 ist es möglich, handelsübliches IPDA mit einem trans-Anteil von 24 % und einem cis-Anteil von 76 % einzusetzen.

### Herstellung des Gießharzsystems

Es werden jeweils ein Epoxidharz auf Basis von Bisphenol-A-diglycidylether (Epoxidzahl 5,30 Äquivalente/kg, Viskosität bei 25 °C 10.500 mPas) und handelsübliches IPDA gemischt. Zur besseren Durchhärtung werden Benzylalkohol, worin das IPDA und der ebenfalls mitverwendete Salicylalkohol zunächst gelöst werden, zugegeben. Die Ergebnisse sind in der Tabelle 2.2.1 dargestellt.

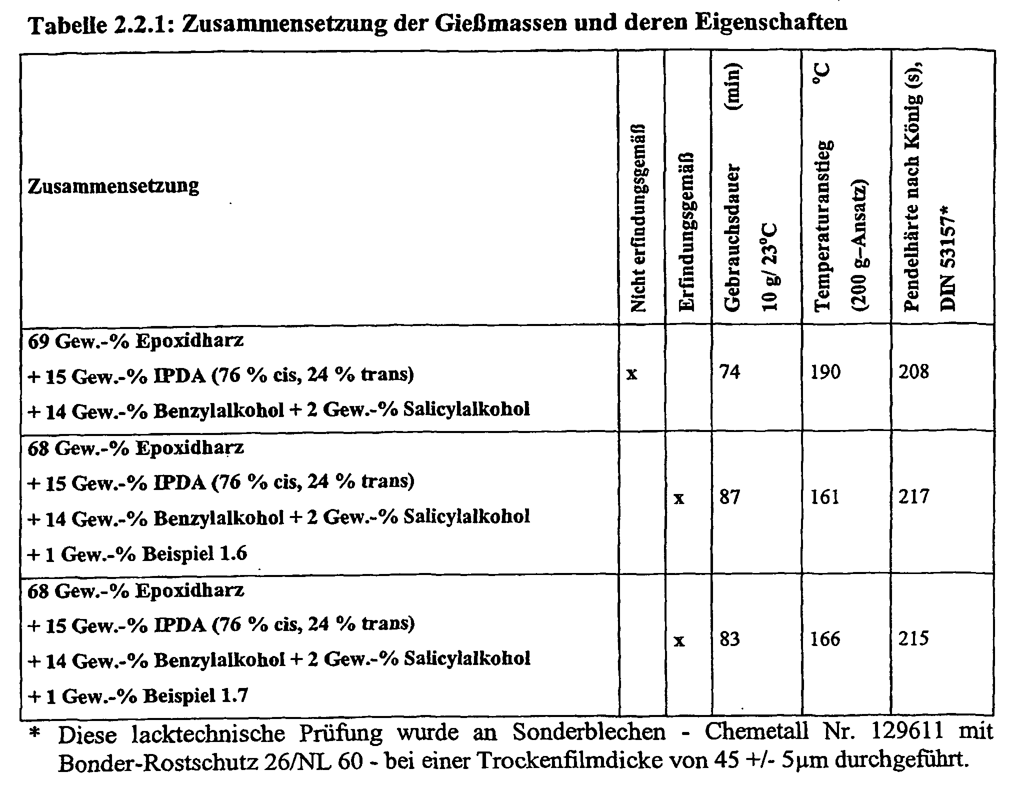

Es zeigt sich, dass die erfindungsgemäßen Zusammensetzungen gegenüber herkömmlichen Zusammensetzungen eine längere Gebrauchsdauer, eine niedrigere maximale Temperatur bei mindestens gleich guten bzw. verbesserten lacktechnischen Eigenschaften aufweisen.

### Beispiel 2.3: Prüfung in einer anorganischen Matrix (Mörtel)

12,5 Gew.-Teile Portlandzement, 12,5 Gew.-Teile Kalk und 75,0 Gew.-Teile Flusssand (alle Komponenten vom Baumarkt) werden mit Wasser zu einem hochviskosen Mörtel gemischt. Jeweils 0,06 Gew.-Teile der Produkte aus den Beispielen 1.2, 1.7 und 1.8 werden in verschiedenen Versuchen bei den erfindungsgemäßen Zusammensetzungen homogen eingearbeitet. Danach füllt man bei Raumtemperatur eine quaderförmige Form der Kantenlänge 150 x 20 x 5 mm mit diesem Mörtel und entformt diese Mischung nach 1 Tag. Danach lässt man den Mörtel weitere 3 Tage bei Raumtemperatur trocknen. Nach der Trocknung und der Entformung lässt man die Prüfkörper aus einer Höhe von 1,50 m waagerecht auf einen Betonboden fallen. Beurteilt wird das Bruchverhalten (Tabelle 2.3.1).

Nach visueller Beurteilung wurden die Noten 1 (sehr gut) bis 5 (sehr schlecht) vergeben.

**Tabelle 2.3.1:**

| **Zusammensetzung der anorganischen Matrix und deren Eigenschaften** | | | |
|---|---|---|---|
| Zusammensetzung (Gew.-Teile) | Nicht erfindungsgemäß | Erfindungsgemäß | Bruchverhalten |
| 100 reiner Mörtel | x | | 5 |
| 100 reiner Mörtel + 0,06 Beispiel 1.2 | | x | 2 |
| 100 reiner Mörtel + 0,06 Beispiel 1.7 | | x | 3 |
| 100 reiner Mörtel + 0,06 Beispiel 1.8 | | x | 3 |

Es zeigt sich, dass die erfindungsgemäßen Zusammensetzungen gegenüber herkömmlichen Zusammensetzungen eine höhere Elastizität bzw. ein verbessertes Bruchverhalten aufweisen.

Die in den Beispielen verwendeten Chemikalien wurden von den folgenden Lieferanten bezogen:
- ABCR Gelest GmbH & Co KG (Postfach 210135; Hansastr. 29c; D-76189 Karlsruhe)
- Aldrich (P.O. Box 355; Milwaukee; WI 53201; USA)
- Sigma-Aldrich Chemie GmbH (Postfach; D-80239 Deisenhofen)
- Hybrid Plastics (18237 Mt. Baldy Circle; Fountain Valley; CA 92708-6117, USA)

## Patentansprüche

1. Matrix,
**dadurch gekennzeichnet,**
**dass** sie mittels zumindest eines Vernetzers vernetzt wurde, der funktionalisierte polyedrische oligomere Silizium-Sauerstoff-Clustereinheiten aufweist, gemäß der Formel
[RₐX_{b}SiO_{1.5})ₘ(R_{c}X_{d}SiO)ₙ(RₑX_{f}Si₂O_{2,5})ₒ(R_{g}XₕSi₂O₂)ₚ]
mit a, b, c = 0-1; d = 1-2; e, f, g = 0-3; h = 1-4; m+n+o+p ≥ 4; a+b = 1; c-d = 2; c+f = 3 und g+h = 4;
**R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
**X** = Oxy-, Hydroxy , Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
wobei die Substituenten vom Typ **R** gleich oder unterschiedlich sind und die Substituenten vom Typ **X** gleich oder unterschiedlich sind und mindestens zwei der Substituenten vom Typ **X** sind.

2. Matrix gemäß Anspruch 1,
**dadurch gekennzeichnet,**
**dass** der Vernetzer funktionalisierte polyedrische oligomere Silizium-Sauerstoff-Clustereinheiten aufweist, wobei mindestens einer der Substituenten vom Typ **X** eine Isocyanat-, blockierte Isocyanat-, Amino-, Acrylat-, Methacrylat-, Alkoxysilyl-, Alkoxysilylalkyl-, Hydroxy- oder Epoxygruppe aufweist.

3. Matrix gemäß Anspruch 1 oder 2,
**dadurch gekennzeichnet,**
**dass** der Vernetzer funktionalisierte polyedrische oligomere Silizium-Sauerstoff-Clustereinheiten aufweist, wobei mindestens zwei der Substituenten vom Typ **X** gleich sind.

4. Matrix gemäß zumindest einem der Ansprüche 1, bis 3,
**dadurch gekennzeichnet,**
**dass** sie mittels einer Kombination von verschiedenen Vernetzern vernetzt wurde.

5. Matrix gemäß zumindest einem der Ansprüche 1 bis 4,
**dadurch gekennzeichnet,**
**dass** sie ein organisches und/oder anorganisches Matrixmaterial aufweist.

6. Matrix gemäß zumindest einem der Ansprüche 1 bis 5,
**dadurch gekennzeichnet,**
**dass** sie als anorganisches Matrixmaterial Gläser, mineralische Baustoffe und/oder anorganische Sintermassen aufweist.

7. Matrix gemäß zumindest einem der Ansprüche 1 bis 6,
**dadurch gekennzeichnet,**
**dass** sie als organisches Matrixmaterial ein Elastomer oder einen thermo- oder duroplastischen Kunststoff aufweist.

8. Matrix gemäß dem Anspruch 7,
**dadurch gekennzeichnet,**
**dass** das organische Matrixmaterial einen Kunststoff ausgewählt aus Polyethylen, Polypropylen, Polyester, Copolyester, Polycarbonat, Polyamid, Copolyamid, Folyumthan, Polyacrylat, Polymethacrylat, Polymethacrylatcopolymer, Polysiloxan, Polysilan, Polytetrafluorethylen, Phenolharz, Polyoxymethylen, Epoxidharz, Polyvinylchlorid, Vinylchloridcopolymer, Polystyrol, Copolymeren des Styrols, ABS-Polymer, Alkydharz, ungesättigtem Polyesterharz, Nitrocelluloscharz oder Kautschuk aufweist.

9. Matrix gemäß zumindest einem der Ansprüche 1 bis 8,
**dadurch gekennzeichnet,**
**dass** die Silasesquioxaneinheit des Vernetzers mindestens eine kovalente Bindung zu dem Matrixmaterial ausbildet.

10. Matrix gemäß zumindest einem der Ansprüche 1 bis 9,
**dadurch gekennzeichnet,**
**dass** das Matrixmaterial von 0,1 bis 50 Gew.-% des Vernetzers aufweist.

11. Verfahren zur Vernetzung von Matrixmaterialien zu einer festen Matrix,
**dadurch gekennzeichnet,**
**dass** ein Vernetzer eingesetzt wird, der funktionalisierte polyedrische oligomere Silizium-Sauerstoff-Clustereinheiten aufweist, gemäß der Formel
[(RₐX_{b}SiO_{1.5})ₘ (R_{c}X_{d}SiO)ₙ (RₑX_{f}Si₂O_{2.5})ₒ (R_{g}XₕSi₂O₂)ₚ]
mit a, b, c = 0-1; d = 1-2; e, f, g = 0-3; h = 1-4; m+n+o+p ≥ 4; a+b = 1; c+d = 2; e+f = 3 und g+h = 4;
**R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
**X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
wobei die Substituenten vom Typ **R** gleich oder unterschiedlich sind und die Substituenten vom Typ **X** gleich oder unterschiedlich sind und mindestens zwei der Substituenten vom Typ **X** sind.

12. Verfahren gemäß Anspruch 11,
**dadurch gekennzeichnet,**
**dass** der Vernetzer funktionalisierte polyedrische oligomere Silizium-Sauerstoff-Clustereinheiten aufweist, wobei mindestens einer der Substituenten vom Typ **X** eine Isocyanat-, blockierte Isocyanat-, Amino-, Acrylat-, Methacrylat-, Alkoxysilyl-, Alkoxysilylalkyl-, Hydroxy- oder Epoxygruppe aufweist.

13. Verfahren gemäß Anspruch 11 oder 12,
**dadurch gekennzeichnet,**
**dass** der Vernetzer funktionalisierte polyedrische oligomere Silizium-Sauerstoff-Clustereinheiten aufweist, wobei mindestens zwei der Substituenten vom Typ **X** gleich sind.

## Claims

1. A matrix which has been crosslinked by means of at least one crosslinker which comprises functionalized polyhedral oligomeric silicon-oxygen cluster units of the formula
[(RₐX_{b}SiO_{1.5})ₘ (R_{c}X_{d}SiO)ₙ (RₑX_{f}Si₂O_{2.5})ₒ (R_{g}XₕSi₂O₂)ₚ]
with a,b,c = 0-1; d = 1-2; e,f,g = 0-3; h = 1-4; m+n+o+p ≥ 4; a+b = 1, c+d = 2 ; e+f = 3 and g+h = 4;
**R** = hydrogen atom, alkyl, cycloalkyl, alkenyl, cycloalkenyl, alkynyl, cycloalkynyl, aryl, heteroaryl group or polymer unit, which are in each case substituted or unsubstituted or further functionalized polyhedral oligomeric silicon-oxygen cluster units, which are attached by way of a polymer unit or a bridging unit,
**X** = oxy, hydroxyl, alkoxy, carboxyl, silyl, alkylsilyl, alkoxysilyl, siloxy, alkylsiloxy, alkoxysiloxy, silylalkyl, alkoxysilylalkyl, alkylsilylalkyl, halogen, epoxy, ester, fluoroalkyl, isocyanate, blocked isocyanate, acrylate, methacrylate, nitrile, amino, phosphine group or substituents of the type **R** containing at least one such group of the type **X,**
the substituents of the type **R** being identical or different and the substituents of the type **X** being identical or different and at least two of the substituents being of type **X.**

2. The matrix as claimed in claim 1, wherein the crosslinker comprises functionalized polyhedral oligomeric silicon-oxygen cluster units, at least one of the substituents of type **X** containing an isocyanate, blocked isocyanate, amino, acrylate, methacrylate, alkoxysilyl, alkoxysilylalkyl, hydroxyl or epoxy group.

3. The matrix as claimed in claim 1 or 2, wherein the crosslinker comprises functionalized polyhedral oligomeric silicon-oxygen cluster units, at least two of the substituents of type **X** are identical.

4. The matrix as claimed in at least one of claims 1 to 3, which has been crosslinked by means of a combination of different crosslinkers.

5. The matrix as claimed in at least one of claims 1 to 4, which comprises an organic and/or inorganic matrix material.

6. The matrix as claimed in at least one of claims 1 to 5, which comprises as inorganic matrix material glasses, mineral building materials and/or inorganic sinter compositions.

7. The matrix as claimed in at least one of claims 1 to 6, which comprises as organic matrix material an elastomer or a thermoplastic or thermoset.

8. The matrix as claimed in claim 7, wherein the organic matrix material is a plastic selected from polyethylene, polypropylene, polyester, copolyester, polycarbonate, polyamide, copolyamide, polyurethane, polyacrylate, polymethacrylate, polymethacrylate copolymer, polysiloxane, polysilane, polytetrafluoroethylene, phenolic resin, polyoxymethylene, epoxy resin, polyvinyl chloride, vinyl chloride copolymer, polystyrene, styrene copolymer, ABS polymer, alkyd resin, unsaturated polyester resin, nitrocellulose resin, and rubber.

9. The matrix as claimed in at least one of claims 1 to 8, wherein the silasesquioxane unit of the crosslinker forms at least one covalent bond to the matrix material.

10. The matrix as claimed in at least one of claims 1 to 9, wherein the matrix material contains from 0.1 to 50% by weight of the crosslinker.

11. A method of crosslinking matrix materials to form a sold matrix, which comprises using a crosslinker which comprises functionalized polyhedral oligomeric silicon-oxygen cluster units of the formula
[(RₐX_{b}SiO_{1.5})ₘ (R_{c}X_{d}SiO)ₙ (RₑX_{f}Si₂O_{2.5})ₒ (R_{g}XₕSi₂O₂)ₚ]
with a,b,c = 0-1; d = 1-2; e,f,g = 0-3; h = 1-4; m+n+o+p ≥ 4; a+b = 1, c+d = 2; e+f = 3 and g+h = 4;
**R =** hydrogen atom, alkyl, cycloalkyl, alkenyl, cycloalkenyl, alkynyl, cycloalkynyl, aryl, heteroaryl group or polymer unit, which are in each case substituted or unsubstituted or further functionalized polyhedral oligomeric silicon-oxygen cluster units, which are attached by way of a polymer unit or a bridging unit,
**X** = oxy, hydroxyl, alkoxy, carboxyl, silyl, alkylsilyl, alkoxysilyl, siloxy, alkylsiloxy, alkoxysiloxy, silylalkyl, alkoxysilylalkyl, alkylsilylalkyl, halogen, epoxy, ester, fluoroalkyl, isocyanate, blocked isocyanate, acrylate, methacrylate, nitrile, amino, phosphine group or substituents of the type **R** containing at least one such group of the type **X,**
the substituents of the type **R** being identical or different and the substituents of the type **X** being identical or different and at least two of the substituents being of type **X**.

12. The method as claimed in claim 11, wherein the crosslinker comprises functionalized polyhedral oligomeric silicon-oxygen cluster units, at least one of the substituents of type **X** containing an isocyanate, blocked isocyanate, amino, acrylate, methacrylate, alkoxysilyl, alkoxysilylalkyl, hydroxyl or epoxy group.

13. The method as claimed in claim 11 or 12, wherein the crosslinker comprises functionalized polyhedral oligomeric silicon-oxygen cluster units, at least two of the substituents of type **X** are identical.

## Revendications

1. Matrice,
**caractérisée en ce qu'**
elle a été réticulée au moyen d'au moins un réticulant qui présente des unités oligomères de cluster silicium-oxygène polyédriques fonctionnalisées, selon la formule
[(RₐX_{b}SiO_{1,5})ₘ (R_{c}X_{d}SiO)ₙ (RₑX_{f}Si₂O_{2,5})ₒ (R_{g}XₕSi₂O₂)ₚ]
avec a, b, c = 0-1 ; d = 1-2 ; e, f, g = 0-3 ; h = 1-4 ; m+n+o+p ≥ 4 ; a+b = 1 ; c-d = 2 ; e+f = 3 et g+h = 4 ;
R = un atome d'hydrogène, un groupe alkyle, cycloalkyle, alcényle, cycloalcényle, alcinyle, cycloalcinyle, aryle, hétéroaryle ou une unité de polymère, qui sont respectivement substitués ou non substitués ou autres unités oligomères de cluster silicium-oxygène polyédriques fonctionnalisées qui sont reliées par une unité polymère ou une unité de pont,
X = un groupe oxy, hydroxy, alcoxy, carboxy, silyle, alkylsilyle, alcoxysilyle, siloxy, alkylsiloxy, alcoxysiloxy, silylalkyle, alcoxysilylalkyle, alkylsilylalkyle, halogène, époxy, ester, fluoroalkyle, isocyanate, isocyanate bloqué, acrylate, méthacrylate, nitrile, amino, phosphine ou des substituants de type R présentant au moins un de ces groupes de type X,
les substituants de type R étant identiques ou différents et les substituants de type X étant identiques ou différents et au moins deux des substituants étant de type X.

2. Matrice selon la revendication 1,
**caractérisée en ce que**
le réticulant présente des unités oligomères de cluster silicium-oxygène polyédriques fonctionnalisées, au moins un des substituants du type X présentant un groupe isocyanate, isocyanate bloqué, amino, acrylate, méthacrylate, alcoxysilyle, alcoxylsilylalkyle, hydroxy ou époxy.

3. Matrice selon la revendication 1 ou 2,
**caractérisée en ce que**
le réticulant présente des unités oligomères de cluster silicium-oxygène polyédriques fonctionnalisées, au moins deux des substituants du type X étant identiques.

4. Matrice selon au moins l'une quelconque des revendications 1 à 3,
**caractérisée en ce qu'**
elle a été réticulée au moyen d'une combinaison de différents réticulants.

5. Matrice selon au moins l'une quelconque des revendications 1 à 4,
**caractérisée en ce qu'**
elle présente un matériau de matrice organique et/ou inorganique.

6. Matrice selon au moins l'une quelconque des revendications 1 à 5,
**caractérisée en ce que**
comme matériau de matrice inorganique elle présente des verres, des composants minéraux et/ou des masses frittées inorganiques.

7. Matrice selon au moins l'une quelconque des revendications 1 à 6,
**caractérisée en ce que**
comme matériau de matrice inorganique elle présente un élastomère ou une matière thermoplastique ou duroplastique.

8. Matrice selon la revendication 7,
**caractérisée en ce que**
le matériau de matrice organique présente une matière plastique choisie parmi le polyéthylène, le polypropylène, le polyester, le copolyester, le polycarbonate, le polyamide, le copolyamide, le polyuréthanne, le polyacrylate, le polyméthacrylate, le copolymère de polyméthacrylate, le polysiloxane, le polysilane, le polytétrafluoroéthylène, la résine phénolique, le polyoxyméthylène, la résine époxy, le chlorure de polyvinyle, le copolymère de chlorure de vinyle, le polystyrène, les copolymères de styrène, le polymère acrylonitrile-butadiène-styrène, la résine alkyde, la résine de polyester insaturée, la résine de nitrocellulose ou le caoutchouc.

9. Matrice selon au moins l'une quelconque des revendications 1 à 8,
**caractérisée en ce que**
l'unité silasesquioxane du réticulant forme au moins une liaison covalente avec le matériau de matrice.

10. Matrice selon au moins l'une quelconque des revendications 1 à 9,
**caractérisée en ce que**
le matériau de matrice comprend de 0,1 à 50 % en poids du réticulant.

11. Procédé de réticulation de matériaux pour constituer une matrice solide,
**caractérisé en ce que**
l'on utilise un réticulant qui présente des unités oligomères de cluster silicium-oxygène polyédriques fonctionnalisées, selon la formule
[(RₐX_{b}SiO_{1,5})ₘ (R_{c}X_{d}SiO)ₙ (RₑX_{f}Si₂O_{2,5})ₒ (R_{g}XₕSi₂O₂)ₚ]
avec a, b, c = 0-1 ; d = 1-2 ; e, f, g = 0-3 ; h = 1-4 ; m+n+o+p ≥ 4 ; a+b = 1 ; c-d = 2 ; e+f = 3 et g+h = 4 ;
R = un atome d'hydrogène, un groupe alkyle, cycloalkyle, alcényle, cycloalcényle, alcinyle, cycloalcinyle, aryle, hétéroaryle ou une unité de polymère, qui sont respectivement substitués ou non substitués ou autres unités oligomères de cluster silicium-oxygène polyédriques fonctionnalisées qui sont reliées par une unité polymère ou une unité de pont,
X = un groupe oxy, hydroxy, alcoxy, carboxy, silyle, alkylsilyle, alcoxysilyle, siloxy, alkylsiloxy, alcoxysiloxy, silylalkyle, alcoxysilylalkyle, alkylsilylalkyle, halogène, époxy, ester, fluoroalkyle, isocyanate, isocyanate bloqué, acrylate, méthacrylate, nitrile, amino, phosphine ou des substituants de type R présentant au moins un de ces groupes de type X,
les substituants de type R étant identiques ou différents et les substituants de type X étant identiques ou différents et au moins deux des substituants étant de type X.

12. Procédé selon la revendication 11,
**caractérisé en ce que**
le réticulant présente des unités oligomères de cluster silicium-oxygène polyédriques fonctionnalisées, au moins un des substituants du type X présentant un groupe isocyanate, isocyanate bloqué, amino, acrylate, méthacrylate, alcoxysilyle, alcoxylsilylalkyle, hydroxy ou époxy.

13. Procédé selon la revendication 11 ou 12,
**caractérisé en ce que**
le réticulant présente des unités oligomères de cluster silicium-oxygène polyédriques fonctionnalisées, au moins deux des substituants du type X étant identiques.
